# EUROPEAN PATENT SPECIFICATION

(11) **EP 3 953 141 B1**
(45) Date of publication and mention of the grant of the patent: **22.02.2023**
(21) Application number: 20717190.1
(22) Date of filing: 08.04.2020
(51) Int. Cl.: B29C 51/00, B29D 7/01

(54) **POLYBUTYLENE TEREPHTHALATE THERMOFORMING PROCESS**
VERFAHREN ZUM THERMOFORMEN VON POLYBUTYLENTEREPHTHALAT
PROCÉDÉ DE THERMOFORMAGE DE POLYBUTYLÈNE TÉRÉPHTALATE

(30) Priority: 11.04.2019 EP 19168782
(43) Date of publication of application: 16.02.2022
(73) Proprietor: BASF SE, 67056 Ludwigshafen am Rhein (DE)
(72) Inventor: LEHENMEIER, Maximilian, 67056 Ludwigshafen (DE); KNIESEL, Simon, 67056 Ludwigshafen (DE); GUBBELS, Erik, 67056 Ludwigshafen (DE)
(86) International application number: PCT/EP2020/059953
(87) International publication number: WO 2020/208053

(56) References cited:
- WO-A1-2013/172214
- JP-A- 2006 265 332
- JP-A- 2006 265 333
- JP-A- 2018 104 619
- JP-B2- 5 995 471
- US-A1- 2013 303 660
- A.K KALKAR ET AL: "Molecular orientation and relaxation in poly(butylene terephthalate)/polycarbonate blends", POLYMER, vol. 44, no. 23, 1 November 2003 (2003-11-01), pages 7251-7264, XP055621791, GB ISSN: 0032-3861, DOI: 10.1016/j.polymer.2003.08.018
- JING HUANG ET AL: "Mechanical properties of thermoplastic polyester elastomer controlled by blending with poly(butylene terephthalate)", POLYMER TESTING, vol. 55, 1 October 2016 (2016-10-01), pages 152-159, XP055621780, AMSTERDAM, NL ISSN: 0142-9418, DOI: 10.1016/j.polymertesting.2016.08.020
- K. YAMASHITA ET AL: "Numerical analysis of neck propagation in polymeric materials. Part 2 - Neck propagation behaviour of poly (butylene terephthalate) mouldings", PLASTICS, RUBBER & COMPOSITES: MACROMOLECULAR ENGINEERING, vol. 30, no. 10, 19 October 2001 (2001-10-19), pages 477-483, XP055621807, GB ISSN: 1465-8011, DOI: 10.1179/146580101322913194

## Description

The present invention relates to a polybutylene terephthalate thermoforming process, the use of specific additives therein, the thermoformed moldings and molding compositions.

Thermoforming is a manufacturing process where a plastic sheet is heated to a pliable forming temperature, formed to a specific shape in a mold, cooled down to solidity, and trimmed to create a usable product. The sheet, or "film" when referring to thinner gauges and certain material types, is heated in an oven to a high-enough temperature that permits it to be stretched into or onto a mold and cooled to a finished shape. Its simplified version is vacuum forming.

In its simplest form, a small tabletop or lab size machine can be used to heat small cut sections of plastic sheet and stretch it over a mold using vacuum. This method is often used for sample and prototype parts. In complex and high-volume applications, very large production machines are utilized to heat and form the plastic sheet and trim the formed parts from the sheet in a continuous high-speed process, and can produce many thousands of finished parts per hour depending on the machine and mold size and the size of the parts being formed.

Thermoforming differs from injection molding, blow molding, rotational molding and other forms of processing plastics. Thin-gauge thermoforming is primarily the manufacture of disposable cups, containers, lids, trays, blisters, clamshells, and other products for the food, medical, and general retail industries. Thick-gauge thermoforming includes parts as diverse as vehicle door and dash panels, utility vehicle beds and plastic pallets.

In the most common method of high-volume, continuous thermoforming of thin-gauge products, plastic sheet is fed from a roll or from an extruder into a set of indexing chains that incorporate pins, or spikes, that pierce the sheet and transport it through an oven for heating to forming temperature. The heated sheet then indexes into a form station where a mating mold and pressure-box close on the sheet, with vacuum then applied to remove trapped air and to pull the material into or onto the mold along with pressurized air to form the plastic to the detailed shape of the mold. Plug-assists are typically used in addition to vacuum in the case of taller, deeper-draw formed parts in order to provide the needed material distribution and thicknesses in the finished parts. After a short form cycle, a burst of reverse air pressure is actuated from the vacuum side of the mold as the form tooling opens, commonly referred to as air-eject, to break the vacuum and assist the formed parts off of, or out of, the mold. A stripper plate may also be utilized on the mold as it opens for ejection of more detailed parts or those with negative-draft, undercut areas. The sheet containing the formed parts then indexes into a trim station on the same machine, where a die cuts the parts from the remaining sheet web, or indexes into a separate trim press where the formed parts are trimmed. The sheet web remaining after the formed parts are trimmed is typically wound onto a take-up reel or fed into an inline granulator for recycling.

Thermoplastic molding compositions based on polybutylene terephthalate are known from e.g. US 2016/0122530 A1 and US 2008/0281018 A1.

The object underlying the present invention is to provide polybutylene terephthalate molding compositions which have an improved thermoforming behavior. Advantageously, the necking upon elongation of sheets of films of the polybutylene terephthalate molding composition shall be reduced, the stress increase upon strain imposed on the sheets or films shall be lowered and/or the elongation behavior of the sheets or films upon imposed strain shall be homogenized.

These objects are achieved according to the present invention by the use of a thermoplastic polymer having a melting point below 220 °C as additive in polybutylene terephthalate molding compositions for reducing the necking upon elongation of sheets or films of the polybutylene terephthalate molding composition in thermoforming processes, wherein the thermoplastic polymer having a melting point below 220 °C is selected from the group consisting of polyesters based on aliphatic and aromatic dicarboxylic acids and on aliphatic dihydroxy compounds.

The advantages are most evident in thermoforming processes and/or hot-film extrusion which often precede(s) the thermoforming step.

The material thickness upon thermoforming is equilibrated by the use of a thermoplastic polymer having a melting point below 220 °C as additive in polybutylene terephthalate molding compositions.

The term "melting point" is mainly used for semicrystalline polymers, whereas for amorphous polymers, the glass transition temperature Tg replaces the melting point. Thus, the term "melting point", as used herein, defines or denotes the melting point for semicrystalline polymers, and the Tg for amorphous polymers.

Preferably, all of the above-mentioned effects are achieved by the use of the present invention.

The object is furthermore achieved by a process for manufacturing moldings containing or preferably made of a polybutylene terephthalate molding composition, wherein the polybutylene terephthalate molding composition comprises
a) 50 to 95 wt% of polybutylene terephthalate as component A,
b) 5 to 50 wt% of the thermoplastic polymer having a melting point below 220 °C, as component B,
c) 0 to 45 wt% of filler as component C,
d) 0 to 20 wt% of further additives as component D,
wherein the total of components A to D is 100 wt%, and wherein component B is a polyester based on aliphatic and aromatic dicarboxylic acids and on aliphatic dihydroxy compounds, by heating a sheet or film containing or preferably made of the polybutylene terephthalate molding composition to a pliable forming temperature and thermoforming the heated sheet of film to a desired shape in a mold, cooling the shaped molding so that it solidifies and optionally trimming the shaped molding.

The object is furthermore achieved by a corresponding polybutylene terephthalate molding composition, which can be employed e.g. for thermoforming or injection molding, and the thermoformed or injection-molded molding obtainable by the above process.

Polybutylene terephthalate (PBT) is a thermoplastic engineering polymer which is for example used as an insulator in the electrical and electronics industry. It is a thermoplastic and semicrystalline polymer or polyester having a melting point of 222 to 225 °C, typically 223 °C.

According to the invention it has been found that by adding a thermoplastic polymer having a melting point below the melting point of polybutylene terephthalate, the curve of sliding as expressed as a stress/strain-diagram, can be smoothed, and the initial "bump" observed during 0 to 30 % strain can be avoided. This "bump" is an increase in the stress which is typically decreasing again after 20 to 30 % strain, until a lower plateau is reached. This "bump" can be compared to an activation energy in catalytic processes and can be described as a necking that a tensile bar experiences when a strain is applied. This "necking" can be seen as a decrease in cross-sectional area in an area of the tensile bar which experiences more elongation than other parts thereof. Often this "necking" occurs when a heated sheet or film of polymer is stretched in the longitudinal direction between hot and cold rollers. The "necking" leads to a non-uniform cross-sectional area of the tensile bar upon application of strain. In thermoforming processes, this leads to a decreased material thickness in regions of high strain. However, it is desirable to have a uniform material thickness throughout the whole thermoformed body as far as possible, in order to avoid thin areas of material which lead to a mechanical weakness and inhomogeneous outer appearance, e.g. for colored or pigmented molded parts.

By adding the lower-melting thermoplastic polymer in the PBT it is possible to reduce the described necking upon elongation, which can also be described as lowering of the stress increase upon strain imposed on the sheets or films, or as homogenizing the elongation behavior of the sheets or film.

Typically, the "necking" is more pronounced at lower thermoforming temperatures. In other words, by adding the lower-melting thermoplastic polymer to the PBT, the temperature window in which the thermoforming can be performed can be broadened.

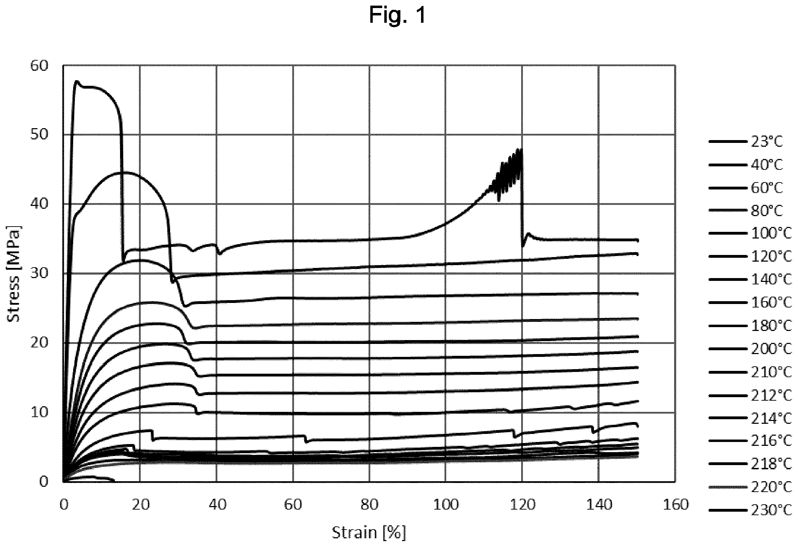

Fig. 1 shows a typical stress-strain diagram for PBT (Ultradur^{®} B6550 LN). The tensile test is performed according to ISO 527-2:2012 at 50 mm/min, as described in the experimental section.

The stress in dependence on the strain is monitored for different temperatures, increasing from top curve to bottom curve, in all figures. A theoretical thermoforming temperature window of from 210 to 220 °C can be determined from these curves of sliding.

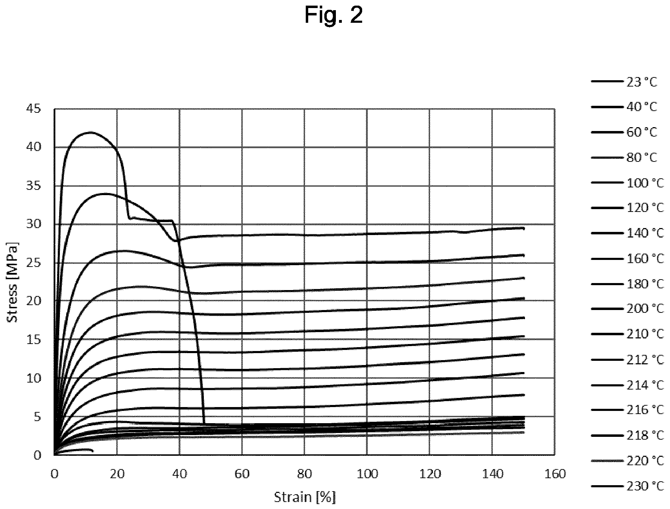

By including the lower-melting thermoplastic polymer according to the present invention, the theoretical thermoforming window can be significantly broadened as shown in Figure 2, which shows a similar tensile test result, with a PBT containing 20 wt% of polyester based on aliphatic and aromatic dicarboxylic acids and on aliphatic dihydroxy compounds (Ultradur^{®} B6550 LN with 20 wt% ecoflex^{®} F Blend C1200, both of BASF SE).

It is preferred that the thermoplastic polymer can be easily dispersed in the PBT matrix and remains dispersed in the PBT matrix without showing large-scale phase separation during the thermoforming process. Thus, thermoplastic polymers are preferred which are chemically similar to PBT.

The thermoplastic polymers are selected from the group consisting of polyesters based on aliphatic and aromatic dicarboxylic acids and on aliphatic dihydroxy compounds.

On the other hand, polyketon and polyamide are not preferred.

The amount of the thermoplastic polymer is preferably 5 to 40 wt%, more preferably 10 to 30 wt%, most preferably 15 to 25 wt%, based on the total amount of polybutylene terephthalate molding composition, which is 100 wt%.

In this context, the term "polybutylene terephthalate molding composition" shall describe the final molding composition of which sheets or films are thermoformed. Thus, the polybutylene terephthalate molding composition contains all ingredients of the final molding composition. Additionally, in these polybutylene terephthalate molding compositions, PBT is the matrix polymer which forms the continuous matrix of the molding composition. In this matrix, the other ingredients are included, preferably in finely dispersed form. Thus, the amount of PBT in the polybutylene terephthalate molding compositions is at least 50 wt%, more preferably at least 60 wt%, most preferably at least 65 wt%, based on the total amount of polybutylene terephthalate molding composition, which is 100 wt%.

Further ingredients of the molding compositions can be mineral fillers and further additives.

Preferably, the polybutylene terephthalate molding composition comprises
a) 50 to 95 wt% of polybutylene terephthalate as component A,
b) 5 to 50 wt% of the thermoplastic polymer having a melting point below 220 °C, as component B,
c) 0 to 45 wt% of filler as component C,
d) 0 to 20 wt% of further additives as component D,
wherein the total of components A to D is 100 wt%, and wherein component B is a polyester based on aliphatic and aromatic dicarboxylic acids and on aliphatic dihydroxy compounds.

If a (mineral) filler is present, it is preferably present at 5 to 45 wt%. The upper limit of component A is then reduced to 90 wt%, so that the sum of wt% does not exceed 100 wt%. If a (mineral) filler is present, the amount is more preferably 7 to 15 wt%, most preferably 8 to 12 wt%, for example approximately 10 wt%, the upper limit of component A being reduced accordingly.

Component B is preferably employed in an amount of from 10 to 30 wt%, more preferably 15 to 25 wt%.

The amount of further additives is 0 to 20 wt%, more preferably 0 to 10 wt%, most preferably 0 to 5 wt%.

The amount of component A consequently is preferably 50 to 83 wt%, most preferably 50 to 77 wt%.

If further additives are present, their minimum amount is preferably 0.1 wt%, more preferably 0.3 wt%. The upper limit of component A is reduced in this case by 0.1 wt% or preferably 0.3 wt%, so that the total of components A to D is 100 wt%.

By adding (mineral) fillers, an accurate reproduction of surface detail can be achieved.

Preferred PBT has a viscosity number in the range of from 120 to 200, preferably from 130 to 190, measured in 0.5 wt% solution in a phenol/o-dichlorobenzene mixture (weight ratio 1 : 1) at 25 °C in accordance with ISO 1628 valid in 2019.

The PBT preferably has a terminal carboxy group content of up to 100 meq/kg of polyester, preferably up to 40 meq/kg of polyester and in particular up to 30 meq/kg of polyester. Polyesters of this type can by way of example be produced by the process of DE-A 44 01 055. Terminal carboxy group content is usually determined by titration methods (e.g. potentiometry).

Particularly preferred PBTs are produced with Ti catalysts. Residual Ti content of these after the polymerization process is preferably less than 250 ppm, more preferably less 200 ppm, particularly less than 150 ppm.

The thermoplastic polymer additive B has a melting point below 220 °C, preferably below 200 °C, more preferably below 180°C, most preferably below 160 °C, specifically below 130 °C, for example below 120 °C. A melting point range of 40 to 219 °C, preferably 50 to 199 °C, more preferably 60 to 179 °C, most preferably 70 to 159 °C, specifically 80 to 129 °C, more specifically 90 to 119 °C, for example 100 to 119 °C can be envisaged according to the present invention. The melting point can be determined by differential scanning calorimetry (DSC) at a heating rate of 20 °C/min, according to ISO 11357-1/-3 valid in 2019.

Component B is a polyester based on aliphatic and aromatic dicarboxylic acids and on aliphatic dihydroxy compounds. Semi-aromatic polyesters can comprise aliphatic dicarboxylic acid units and/or aliphatic dihydroxy compound units and comprise at least one of aromatic dicarboxylic acid units and aromatic dihydroxy compound units. Aliphatic polyesters do not contain aromatic units. Aromatic polyesters do not contain aliphatic units.

Preferably, any of the polyesters based on aliphatic and aromatic dicarboxylic acids and on aliphatic dihydroxy compounds, known as semi-aromatic polyesters, may be used as component B for preparation of the inventive preferably biodegradable polyester mixtures. The molar ratio of aliphatic and aromatic dicarboxylic acids can be 0.5 : 10 to 10 : 0.5, preferably 1 : 10 to 10 : 1, more preferably 3 : 7 to 10 : 1. Mixtures of two or more of these polyesters are of course also suitable as component B.

According to the invention, the term "semiaromatic polyesters" is also intended to include polyester derivatives, such as polyetheresters, polyesteramides, or polyetheresteramides. Among the suitable semiaromatic polyesters are linear non-chain-extended polyesters (WO 92/09654). Preference is given to chain-extended and/or branched semiaromatic polyesters. The latter are disclosed in the specifications mentioned at the outset, WO 96/15173-15176, WO 21689-21692, WO 25446, WO 25448, WO 98/12242, expressly incorporated herein by way of reference. Mixtures of different semiaromatic polyesters may also be used. In particular, the term semiaromatic polyesters is intended to mean products such as ecoflex^{®} (BASF Aktiengesellschaft) and Eastar^{®} Bio (Novamont).

Among the particularly preferred semiaromatic polyesters for component B are polyesters which comprise the following significant components:
BA) an acid component composed of
   a1) from 30 to 99 mol% of at least one aliphatic, or at least one cycloaliphatic, dicarboxylic acid, or its ester-forming derivatives, specifically esters or anhydrides thereof, or a mixture of these,
   a2) from 1 to 70 mol% of at least one aromatic dicarboxylic acid, or its ester-forming derivative, specifically esters or anhydrides thereof, or a mixture of these, and
   a3) from 0 to 5 mol% of a compound comprising sulfonate groups,
BB) a diol component selected from at least one C₂-C₁₂ alkanediol and at least one C₅-C₁₀ cycloalkanediol, or a mixture of these,
and, if desired, also one or more components selected from
BC) a component selected from the group consisting of
   c1) at least one dihydroxy compound comprising ether functions and having the formula I

      HO-[(CH₂)*ₙ*-O]*ₘ*-H (I)

      where n is 2, 3 or 4 and m is a whole number from 2 to 250,
   c2) at least one hydroxycarboxylic acid of the formula Ila or lib 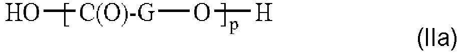 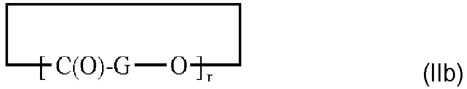 where p is a whole number from 1 to 1500 and r is a whole number from 1 to 4, and G is a radical selected from the group consisting of phenylene, -(CH₂)_{q}- where q is a whole number from 1 to 5, —C(R)H— and -C(R)HCH₂, where R is methyl or ethyl,
   c3) at least one amino-C₂-C₁₂ alkanol, or at least one amino-C₅-C₁₀ cycloalkanol, or a mixture of these,
   c4) at least one diamino-C₁-C₈ alkane,
   c5) at least one 2,2'-bisoxazoline of the formula III 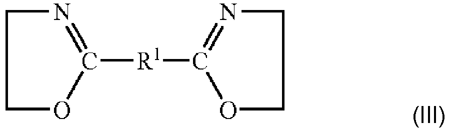 where R¹ is a single bond, a (CH₂)_{Z}-alkylene group, where z is 2, 3 or 4, or a phenylene group
   c6) at least one aminocarboxylic acid selected from the group consisting of the naturally occurring amino acids, polyamides obtainable by polycondensing a dicarboxylic acid having from 4 to 6 carbon atoms with a diamine having from 4 to 10 carbon atoms, compounds of the formulae IVa and IVb 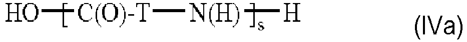 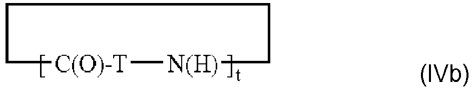 where s is an integer from 1 to 1500 and t is a whole number from 1 to 4, and T is a radical selected from the group consisting of phenylene, -(CH₂)ᵤ-, where u is a whole number from 1 to 12, -C(R²)H- and -C(R²)HCH₂-, where R² is methyl or ethyl,
      and polyoxazolines having the repeat unit V 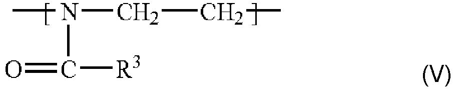 where R³ is hydrogen, C₁-C₆-alkyl, C₅-C₈-cycloalkyl, phenyl, either unsubstituted or with up to three C₁-C₄-alkyl substituents, or tetrahydrofuryl,
      or a mixture composed of c1 to c6,
      and
   BD) a component selected from
      d1) at least one compound having at least three groups capable of ester formation,
      d2) at least one isocyanate,
      d3) at least one divinyl ether,
      or a mixture composed of d1) to d3).

In one preferred embodiment, the acid component BA of the semiaromatic polyesters comprises from 30 to 70 mol%, in particular from 40 to 60 mol%, of a1, and from 30 to 70 mol %, in particular from 40 to 60 mol%, of a2.

Aliphatic acids and the corresponding derivatives a1 which may be used are generally those having from 2 to 10 carbon atoms, preferably from 4 to 6 carbon atoms. They may be either linear or branched. The cycloaliphatic dicarboxylic acids which may be used for the purposes of the present invention are generally those having from 7 to 10 carbon atoms and in particular those having 8 carbon atoms. In principle, however, it is also possible to use dicarboxylic acids having a larger number of carbon atoms, for example having up to 36 carbon atoms.

Examples which may be mentioned are: malonic acid, succinic acid, glutaric acid, 2-methylglutaric acid, 3-methylglutaric acid, adipic acid, pimelic acid, azelaic acid, sebacic acid, fumaric acid, 2,2-dimethylglutaric acid, suberic acid, 1,3-cyclopentanedicarboxylic acid, 1,4-cyclohexanedicarboxylic acid, 1,3-cyclohexanedicarboxylic acid, diglycolic acid, itaconic acid, maleic acid, and 2,5-norbornanedicarboxylic acid and fatty acid dimers thereof.

Ester-forming derivatives of the abovementioned aliphatic or cycloaliphatic dicarboxylic acids which may also be used and which may be mentioned are in particular the di-C₁-C₆-alkylesters, such as dimethyl, diethyl, di-n-propyl, diisopropyl, di-n-butyl, diisobutyl, di-tert-butyl, di-n-pentyl, diisopentyl or di-n-hexylesters. It is also possible to use anhydrides of the dicarboxylic acids.

The dicarboxylic acids or their ester-forming derivatives may be used here individually or in the form of a mixture composed of two or more of these.

It is preferable to use succinic acid, adipic acid, azelaic acid, sebacic acid, brassylic acid, or their respective ester-forming derivatives, or a mixture thereof. It is particularly preferable to use succinic acid, adipic acid, or sebacic acid, or their respective ester-forming derivatives, or a mixture thereof. It is particularly preferable to use adipic acid or its ester-forming derivatives, for example its alkyl esters or a mixture of these. Sebacic acid or a mixture of sebacic acid with adipic acid is preferably used as aliphatic dicarboxylic acid when polymer mixtures having "hard" or "brittle" components, such as polyhydroxybutyrate or in particular polylactide, are prepared. Succinic acid or a mixture of succinic acid with adipic acid is preferably used as aliphatic dicarboxylic acid when polymer mixtures with "soft" or "tough" components, such as polyhydroxybutyrate-co-valerate, are prepared.

Succinic acid, azelaic acid, sebacic acid, and brassylic acid have the additional advantage of being available in the form of renewable raw materials.

Aromatic dicarboxylic acids a2 which may be mentioned are generally those having from 8 to 12 carbon atoms and preferably those having 8 carbon atoms. By way of example, mention may be made of phthalic acid, terephthalic acid, isophthalic acid, 2,6-naphthoic acid and 1,5-naphthoic acid, and also ester-forming derivatives of these. Particular mention may be made here of the di-C₁-C₆-alkylesters, e.g. dimethyl, diethyl, di-n-propyl, diisopropyl, di-n-butyl, diisobutyl, di-tert-butyl, di-n-pentyl-, diisopentyl, or di-n-hexylesters. The anhydrides of the dicarboxylic acids a2 are also suitable ester-forming derivatives.

However, in principle it is also possible to use aromatic dicarboxylic acids a2 having a greater number of carbon atoms, for example up to 20 carbon atoms.

The aromatic dicarboxylic acids or ester-forming derivatives of these a2 may be used individually or as a mixture of two or more of these. It is particularly preferable to use terephthalic acid or its ester-forming derivatives, such as dimethyl terephthalate.

The compound used comprising sulfonate groups is usually one of the alkali metal or alkaline earth metal salts of a sulfonate-containing dicarboxylic acid or ester-forming derivatives thereof, preferably alkali metal salts of 5-sulfoisophthalic acid or mixtures of these, particularly preferably the sodium salt.

In one of the preferred embodiments, the acid component BA comprises from 40 to 60 mol% of a1, from 40 to 60 mol% of a2 and from 0 to 2 mol% of a3. In another preferred embodiment, the acid component A comprises from 40 to 59.9 mol% of a1, from 40 to 59.9 mol% of a2 and from 0.1 to 1 mol% of a3, in particular from 40 to 59.8 mol% of a1, from 40 to 59.8 mol% of a2 and from 0.2 to 0.5 mol% of a3.

The diols BB are generally selected from the group consisting of branched or linear alkanediols having from 2 to 12 carbon atoms, preferably from 4 to 6 carbon atoms, or from the group consisting of cycloalkanediols having from 5 to 10 carbon atoms.

Examples of suitable alkanediols are ethylene glycol, 1,2-propanediol, 1,3-propanediol, 1,2-butanediol, 1,4-butanediol, 1,5-pentanediol, 2,4-dimethyl-2-ethyl-1,3-hexanediol, 2,2-dimethyl-1,3-propanediol, 2-ethyl-2-butyl-1,3-propanediol, 2-ethyl-2-isobutyl-1,3-propanediol and 2,2,4-trimethyl-1,6-hexanediol, in particular ethylene glycol, 1,3-propanediol, 1,4-butanediol or 2,2-dimethyl-1,3-propanediol (neopentyl glycol); cyclopentanediol, 1,4-cyclohexanediol, 1,2-cyclohexanedimethanol, 1,3-cyclohexanedimethanol, 1.4-cyclohexanedimethanol or 2,2,4,4-tetramethyl-1,3-cyclobutanediol. Particular preference is given to 1,4-butanediol, in particular in combination with adipic acid as component a1) and 1,3-propanediol, in particular in combination with sebacic acid as component a1). 1,3-Propanediol and 1,4-butanediol have the additional advantage of being obtainable in the form of renewable raw materials. It is also possible to use mixtures of different alkanediols.

Depending on whether an excess of acid groups or of OH end groups is desired, either component BA or component BB may be used in excess. In one preferred embodiment, the molar ratio of the components BA and BB used may be from 0.4 : 1 to 1.5 : 1, preferably from 0.6 : 1 to 1.1 : 1.

Besides components BA and BB, the polyesters on which the polyester mixtures of the invention are based may comprise other components.

Dihydroxy compounds c1 which are preferably used are diethylene glycol, triethylene glycol, polyethylene glycol, polypropylene glycol and polytetrahydrofuran (poly-THF), particularly preferably diethylene glycol, triethylene glycol and polyethylene glycol, and mixtures of these may also be used, as may compounds which have different variables n (see formula I), for example polyethylene glycol which comprises propylene units (n=3), obtainable, for example, by using methods of polymerization known per se and polymerizing first with ethylene oxide and then with propylene oxide, and particularly preferably a polymer based on polyethylene glycol with different variables n, where units formed from ethylene oxide predominate. The molar mass (Mₙ) of the polyethylene glycol is generally selected within the range from 250 to 8000 g/mol, preferably from 600 to 3000 g/mol.

In one of the preferred embodiments for preparing the semiaromatic polyesters use may be made, for example, of from 15 to 98 mol%, preferably from 60 to 99.5 mol%, of the diols BB and from 0.2 to 85 mol%, preferably from 0.5 to 30 mol%, of the dihydroxy compounds c1, based on the molar amount of BB and c1.

In one preferred embodiment, the hydroxycarboxylic acid c2) used is: glycolic acid, D-, L- or D,L-lactic acid, 6-hydroxyhexanoic acid, cyclic derivatives of these, such as glycolide (1 ,4-dioxane-2,5-dione), D- or L-dilactide (3,6-dimethyl-1,4-dioxane-2,5-dione), p-hydroxybenzoic acid, or else their oligomers and polymers, such as 3-polyhydroxybutyric acid, polyhydroxyvaleric acid, polylactide (for example that obtainable in the form of Nature Works^{®} (Cargill)), or else a mixture of 3-polyhydroxybutyric acid and polyhydroxyvaleric acid (the latter being obtainable as Biopol^{®} from Zeneca) and, for preparing semiaromatic polyesters, particularly preferably the low-molecular-weight and cyclic derivatives thereof.

Examples of amounts which may be used of the hydroxycarboxylic acids are from 0.01 to 50 wt%, preferably from 0.1 to 40 wt%, based on the amount of BA and BB.

The amino-C₂-C₁₂ alkanol or amino-C₅-C₁₀ cycloalkanol used (component c3) which for the purposes of the present invention also include 4-aminomethylcyclohexanemethanol, are preferably amino-C₂-C₆ alkanols, such as 2-aminoethanol, 3-aminopropanol, 4-aminobutanol, 5-aminopentanol or 6-aminohexanol, or else amino-C₅-C₆ cycloalkanols, such as aminocyclopentanol and aminocyclohexanol, or mixtures of these.

The diamino-C₁-C₈ alkanes (component c4) used are preferably diamino-C₄-C₆ alkanes, such as 1,4-diaminobutane, 1,5-diaminopentane or 1,6-diaminohexane (hexamethylenediamine, "HMD").

In one preferred embodiment for preparing the semiaromatic polyesters, use may be made of from 0.5 to 99.5 mol%, preferably from 0.5 to 50 mol%, of c3, based on the molar amount of BB, and of from 0 to 50 mol%, preferably from 0 to 35 mol%, of c4, based on the molar amount of BB.

The 2,2'-bisoxazolines c5 of the formula III are generally obtainable via the process of Angew. Chem. Int. Edit., vol. 11 (1972), pp. 287 to 288. Particularly preferred bisoxazolines are those where R¹ is a single bond, (CH₂)_{z}-alkylene, where z=2, 3 or 4, for example methylene, ethane-1,2-diyl, propane-1,3-diyl or propane-1,2-diyl, or a phenylene group. Particularly preferred bisoxazolines which may be mentioned are 2,2'-bis(2-oxazoline), bis(2-oxazolinyl)methane, 1,2-bis(2-oxazolinyl)ethane, 1,3-bis(2-oxazolinyl)propane and 1,4-bis(2-oxazolinyl)butane, in particular 1,4-bis(2-oxazolinyl)benzene, 1,2-bis(2-oxazolinyl)benzene or 1,3-bis(2-oxazolinyl)benzene.

In preparing the semiaromatic polyesters use may, for example, be made of from 70 to 98 mol% of BB, up to 30 mol% of c3 and from 0.5 to 30 mol% of c4 and from 0.5 to 30 mol% of c5, based in each case on the total of the molar amounts of components BB, c3, c4 and c5. In another preferred embodiment, use may be made of from 0.1 to 5 wt%, preferably from 0.2 to 4 wt% of c5, based on the total weight of BA and BB.

The component c6 used may be naturally occurring aminocarboxylic acids. These include valine, leucine, isoleucine, threonine, methionine, phenylalanine, tryptophan, lysine, alanine, arginine, aspartamic acid, cysteine, glutamic acid, glycine, histidine, proline, serine, tyrosine, asparagine and glutamine.

Preferred aminocarboxylic acids of the formulae IVa and IVb are those where s is an integer from 1 to 1000 and t is an integer from 1 to 4, preferably 1 or 2, and t has been selected from the group consisting of phenylene and -(CH₂)ᵤ-, where u is 1, 5, or 12.

c6 may also be a polyoxazoline of the formula V. However, c6 may also be a mixture of different aminocarboxylic acids and/or polyoxazolines.

In one preferred embodiment, the amount of c6 used is from 0.01 to 50 wt%, preferably from 0.1 to 40 wt%, based on the total amount of components BA and BB.

Among other components which may be used, if desired, for preparing the semiaromatic polyesters are compounds d1 which comprise at least three groups capable of ester formation.

The compounds d1 preferably comprise from three to ten functional groups which are capable of developing ester bonds. Particularly preferred compounds d1 have from three to six functional groups of this type in the molecule, in particular from three to six hydroxy groups and/or carboxy groups. Examples which should be mentioned are: tartaric acid, citric acid, maleic acid; trimethylolpropane, trimethylolethane; pentaerythritol; polyethertriols; glycerol; trimesic acid; trimellitic acid, trimellitic anhydride; pyromellitic acid, pyromellitic dianhydride, and hydroxy-isophthalic acid.

The amounts generally used of the compounds d1 are from 0.01 to 15 mol%, preferably from 0.05 to 10 mol%, particularly preferably from 0.1 to 4 mol%, based on component BA.

Components d2 used are an isocyanate or a mixture of different isocyanates. For example, aromatic or aliphatic diisocyanates may be used. However, higher-functionality isocyanates may also be used.

For the purposes of the present invention, aromatic diisocyanate d2 is especially tolylene 2,4-diisocyanate, tolylene 2,6-diisocyanate, diphenylmethane 2,2'-diisocyanate, diphenylmethane 2,4'-diisocyanate, diphenylmethane 4,4-diisocyanate, naphthylene 1,5-diisocyanate or xylylene diisocyanate.

Among these, particular preference is given to diphenylmethane 2,2'-, 2,4'- and 4,4'-diisocyanate as component d2. The latter diisocyanates are generally used as a mixture.

A three-ring isocyanate d2 which may also be used is tri(4-isocyanophenyl)methane. Multi-ringed aromatic diisocyanates arise during the preparation of single- or two-ring diisocyanates, for example.

Component d2 may also comprise subordinate amounts, e.g. up to 5 wt%, based on the total weight of component d2, of uretdione groups, for example for capping the isocyanate groups.

For the purposes of the present invention, an aliphatic diisocyanate d2 is primarily a linear or branched alkylene diisocyanate or cycloalkylene diisocyanate having from 2 to 20 carbon atoms, preferably from 3 to 12 carbon atoms, e.g. hexamethylene 1,6-diisocyanate, isophorone diisocyanate, or methylenebis(4-isocyanatocyclohexane). Hexamethylene 1,6-diisocyanate and isophorone diisocyanate are particularly preferred aliphatic diisocyanates d2.

Among the preferred isocyanurates are the aliphatic isocyanurates which derive from C₂-C₂₀, preferably C₃-C₁₂, cycloalkylene diisocyanates or alkylene diisocyanates, e.g. isophorone diisocyanate or methylenebis(4-isocyanatocyclohexane). The alkylene diisocyanates here may be either linear or branched. Particular preference is given to isocyanurates based on n-hexamethylene diisocyanate, for example cyclic trimers, pentamers, or higher oligomers of n-hexamethylene diisocyanate.

The amounts generally used of component d2 are from 0.01 to 5 mol%, preferably from 0.05 to 4 mol%, particularly preferably from 0.1 to 4 mol%, based on the total of the molar amounts of BA and BB.

Divinyl ethers d3 which may be used are generally any of the customary and commercially available divinyl ethers. Preference is given to the use of 1,4-butanediol divinyl ethers, 1,6-hexanediol divinyl ethers or 1,4-cyclohexanedimethanol divinyl ethers or a mixture of these.

The amounts of the divinyl ethers preferably used are from 0.01 to 5 wt%, especially from 0.2 to 4 wt%, based on the total weight of BA and BB.

Examples of preferred semiaromatic polyesters are based on the following components:
BA, BB, d1
BA, BB, d2
BA, BB, d1, d2
BA, BB, d3
BA, BB, c1
BA, BB, c1, d3
BA, BB, c3, c4
BA, BB, c3, c4, c5
BA, BB, d1, c3, c5
BA, BB, c3, d3
BA, BB, c3, d1
BA, BB, c1, c3, d3
BA, BB, c2.

Among these, particular preference is given to semiaromatic polyesters based on BA, BB and d1, or BA, BB and d2, or BA, BB, d1 and d2. In another preferred embodiment, the semiaromatic polyesters are based on BA, BB, c3, M and c5 or BA, BB, d1, c3 and c5.

Suitable polyesters are poly(butylene adipate terephthalates) (PBAT), as obtainable under the brand ecoflex^{®} F Blend C1200 of BASF SE.

Preferred PBAT can contain a molar ratio of adipate and terephthalate units in the range of 0.5 : 10 to 10 : 0.5, preferably 1 : 10 to 10 : 1.

Suitable thermoplastic elastomers are for example described in W. K. Witsiepe, Segmented Polyester Thermoplastic Elastomers, published in Polymerization Reactions and New Polymers, chapter 4, 1973, pp. 39 to 60. An example of a thermoplastic elastomer is TPEE, which can be obtained from DuPont as Hytrel^{®} 4056.

Copolymers of acrylic ester, styrene and acrylonitrile are known as ASA polymers. Those are manufactured by INEOS Styrolution as Luran^{®} 358N. It is also possible to employ ABS (acrylonitrile-butadiene-styrene-copolymers).

Polylactic acid (PLA) can be obtained from NatureWorks (Ingeo^{®} PLA 4044).

Polyketons (reference example) can be for example obtained from AKRO Plastic as Akrotek^{®} PK-VM.

Different grades of polyethylene can be employed, for example HDPE (Lupolen^{®} 4261 AG from LyondellBasell) or LDPE (Lupolen^{®}2420F from LyondellBasell).

Fillers (component C) can be selected from particulate or fibrous inorganic materials (mineral fillers), e.g. basalt, kaolin, wollastonite. Particulate materials are preferred over fibers. Possible fibers include glass fibers, carbon fibers, Kevlar fibers, carbon nanotubes. Particulate fillers include talc, carbon black, alumina, titania, silica and mixed oxides thereof. Preferably, talc is employed.

Further additives (component D) can be selected from a wide variety of additives. Particular additives are stabilizers, nucleating agents, lubricants and antiblocking agents, such as stearates (in particular calcium stearate), waxes, such as beeswax or beeswax ester; plasticizers, such as citric ester (in particular tributyl acetylcitrate), glycerol esters, such as triacetylglycerol, or ethylene glycol derivatives; surfactants, such as polysorbates, palmitates, laureates; antistatic agents, antifogging agents, or dyes. See also US 2003/195296 for a list of further additives.

According to one embodiment of the invention, the polybutylene terephthalate molding compositions are free from epoxy-group containing olefinic resins like ethylene/glycidylmethacrylate and ethylene/methylacrylate/glycidylmethacrylate-copolymers, polyethylene like LDPE polycarbonate, thermoplastic polyesterelastomer (TPEE) having soft phases of poly(tetramethyleneglycol), ethylene/butylacrylate/glycidylmethacrylate-copolymers or copoly-etherster-elastomers like HYTREL^{®} 4056.

A preferred additive is a copolymer containing epoxy groups and based on styrene, acrylate and/or methacrylate, of a bisphenol A epoxide, or of a fatty acid amide of fatty acid ester or natural oil containing epoxy groups, or mixtures thereof, each based on the total of compounds A to D which is 100 wt%. This additive is preferably employed in an amount of from 0.1 to 2 wt%, more preferably 0.15 to 1 wt%, most preferably 0.2 to 0.4 wt%, based on the total of components A to D which is 100 wt%. The upper limit of component A is lowered correspondingly.

Most preferably, component D includes a styrene-acrylic acid-glycidyl methacrylate copolymer which can be obtained from BASF SE (Joncryl^{®} ADR 4400), melting point: 115 °C.

The process for manufacturing the moldings made of the above polybutylene terephthalate molding composition includes heating a sheet or foil made of the polybutylene terephthalate molding composition to a pliable forming temperature and thermoforming the heated sheet to a desired shape in a mold, cooling the shaped molding so that it solidifies, and optionally trimming the shaped molding.

A sheet typically has a thickness of from 0.2 to 10 mm, whereas a foil has a thickness of typically 15 to 150 µm).

The pliable forming temperature can be determined by routine tests. Preferably, the thermoforming window should be in the range of from 120 to 225 °C, more preferably 150 to 221 °C, specifically 170 to 220 °C.

The thermoforming process can be as follows:
There are two general thermoforming process categories. Sheet thickness less than 1.5 mm (0.060 inches) is usually delivered to the thermoforming machine from rolls or from a sheet extruder. Thin-gauge roll-fed or inline extruded thermoforming applications are dominated by rigid or semi-rigid disposable packaging. Sheet thicknesses greater than 3 mm (0.120 inches) are usually delivered to the forming machine by hand or an auto-feed method already cut to final dimensions. Heavy, or thick-gauge, cut sheet thermoforming applications are primarily used as permanent structural components. Medium-gauge means sheets 1.5 mm to 3 mm in thickness.

Heavy-gauge forming utilizes the same basic process as continuous thin-gauge sheet forming, typically draping the heated plastic sheet over a mold. Many heavy-gauge forming applications use vacuum only in the form process, although some use two halves of mating form tooling and include air pressure to help form. Aircraft windscreens and machine gun turret windows can be used. Heavy-gauge parts are used as cosmetic surfaces on permanent structures such as kiosks, automobiles, trucks, medical equipment, material handling equipment, spas, and shower enclosures, and electrical and electronic equipment. Unlike most thin-gauge thermoformed parts, heavy-gauge parts are often hand-worked after forming for trimming to final shape or for additional drilling, cutting, or finishing, depending on the product. Heavy-gauge products typically are of a "permanent" end use nature, while thin-gauge parts are more often designed to be disposable or recyclable and are primarily used to package or contain a food item or product.

Microprocessor and computer controls on thermoforming machinery allow for increased process control and repeatability of same-job setups from one production run with the ability to save oven heater and process timing settings between jobs. The ability to place formed sheet into an inline trim station for more precise trim registration has been improved due to the common use of electric servo motors for chain indexing versus air cylinders, gear racks, and clutches. Electric servo motors are also used on more sophisticated forming machines for actuation of the machine platens where form and trim tooling are mounted, rather than air cylinders, giving more precise control over closing and opening speeds and timing of the tooling. Quartz and radiant-panel oven heaters generally provide more precise and thorough sheet heating over cal-rod type heaters, and better allow for zoning of ovens into areas of adjustable heat.

Modern thermoformers utilize multiple sensors to record production-run data in real time including air pressure, temperature, tool strain gauge and other specifications. The system sends out multiple warnings and alerts whenever pre-set production parameters are compromised during a run, thereby reducing machine down time, lowering startup time and decreasing startup scrap.

An integral part of the thermoforming process is the tooling, which is specific to each part that is to be produced. Thin-gauge thermoforming as described above is almost always performed on in-line machines and typically requires molds, plug assists, pressure boxes and all mounting plates as well as trim tooling and stacker parts. Thick or heavy-gauge thermoforming also requires tooling specific to each part, but because the part size can be very large, the molds can be cast aluminum or composite material as well as machined aluminum as in thin gauge. Typically, thick-gauge parts must be trimmed on CNC routers or hand trimmed using saws or hand routers.

The present invention furthermore relates to a polybutylene terephthalate molding composition as defined above.

According to one embodiment, the molding composition comprises less than 10 wt%, based on the polybutylene terephthalate molding composition, of biodegradable homo- or co-polyesters, selected from the group consisting of polylactide, polycaprolactone, polyhydroxyalkanoates and polyesters composed of aliphatic dicarboxylic acids and of aliphatic diols.

According to one embodiment of the invention, the polybutylene terephthalate molding composition does not contain polymers containing acrylic acid and/or styrene containing recurring units other than styrene-acrylic acid-glycidyl methacrylate copolymers.

The present invention also relates to a thermoformed molding of a polybutylene terephthalate molding composition as defined above.

The thermoformed moldings can be from a number of possible applications as outlined above in the introductory part.

The invention is described in more detail in the following examples.

### Examples

Differential Scanning Calorimetry (DSC) is performed at 20 K/min according to ISO 11357-1. Glass transition temperatures are determined according to ISO 11357-2 and melting points according to ISO 11357-3, respectively.

### Materials

Poly(butylene terephthalate) (PBT): Ultradur^{®} B6550 of BASF SE, melting point: 223 °C; Poly(butylene adipate terephthalate) (PBAT): ecoflex^{®} F Blend C1200 of BASF SE, melting point: 110 to 115 °C;
Thermoplastic elastomer (TPEE): Hytrel^{®} 4056 of DuPont, melting point: 152 °C;
Acrylic ester, styrene acrylonitrile (ASA): Luran^{®} 358N of INEOS Styrolution, melting point: 111 °C;
Poly(lactic acid) (PLA): Ingeo^{®} PLA 4044 of NatureWorks, melting point: 153 °C;
Poly(keton) (PK): Akrotek^{®} PK-VM of AKRO Plastic, melting point: 220 °C;
Poly(ethylene) (HDPE): Lupolen^{®} 4261AG of LyondellBasell, melting point: 131 °C;
Poly(ethylene) (LDPE): Lupolen^{®} 2420F of LyondellBasell, melting point: 111 °C;
Polyamide-6.6: Ultramid^{®} A 24E of BASF SE, melting point: 263 °C.

### Preparation of the Example V1

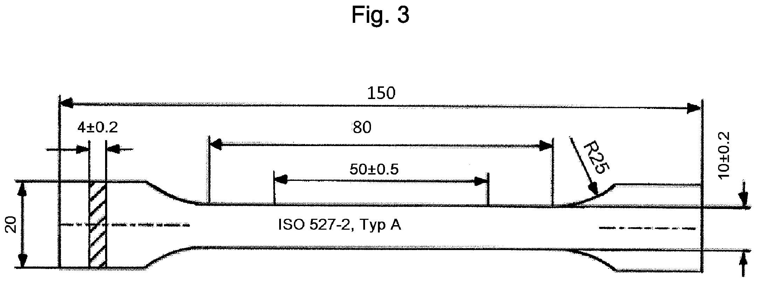

Ultradur^{®} B6550 was mixed with Hytrel^{®} 4056 in a twin-screw extruder (ZE40AUTXi) at 275 °C melt temperature. After extrusion, the strands were cooled with water and cut into granulates. Drying of the sample was done at 100 °C for four hours. The samples were injection molded using an Arburg 470 at 260 °C with a molding time of 5 to 10 seconds. This process yielded tensile bars with a thickness of 4.0 mm (details in Fig. 3).

Examples V2 to V6 and C1 were prepared using the same method.

Fig. 3 shows the dimensions of the tensile bar in mm.

### Testing

Tensile testing was done according to ISO 527-2:2012 at 50 mm/min at different temperatures from 23 °C to 230 °C.

**Table 1. Composition of the Examples V1 to V6 and Comparative Examples C1 to C3, all in wt%**

| | V1 | V2* | V3 | C2 | C3 | V4* | V5* | V6 | C1 |
|---|---|---|---|---|---|---|---|---|---|
| Ultradur^{®} B6550 | 80 | 80 | 80 | 80 | 80 | 80 | 80 | 80 | 100 |
| Hytrel^{®} 4056 | 20 | | | | | | | | |
| Luran^{®} 358N | | 20 | | | | | | | |
| Ingeo^{®} PLA4044 | | | 20 | | | | | | |
| Akrotek^{®} PK-VM | | | | 20 | | | | | |
| Ultramid^{®} A24E | | | | | 20 | | | | |
| Lupolen^{®} 4261AG | | | | | | 20 | | | |
| Lupolen^{®} 2420F | | | | | | | 20 | | |
| ecoflex^{®} F Blend C1200 | | | | | | | | 20 | |

| | | | | | | | | | |
|---|---|---|---|---|---|---|---|---|---|
| *Comparative Example | | | | | | | | | |

Examples of a sliding curve are shown in the enclosed Fig. 1 (Example C1) and Fig. 2 (Example V6). The stress (MPa) is measured depending on the strain [%] according to tensile test ISO 527-2:2012 at 50 mm/min, as of 2019. The different temperatures are indicated in Fig. 1 and Fig. 2 with low temperatures above and high temperatures below.

Fig. 1 refers to composition C1 which has a theoretical thermoforming window of 210 to 220 °C.

Fig. 2 refers to composition V6, which has a theoretical thermoforming window of from 120 to 220 °C.

The following figures show the sliding curves for the other examples:

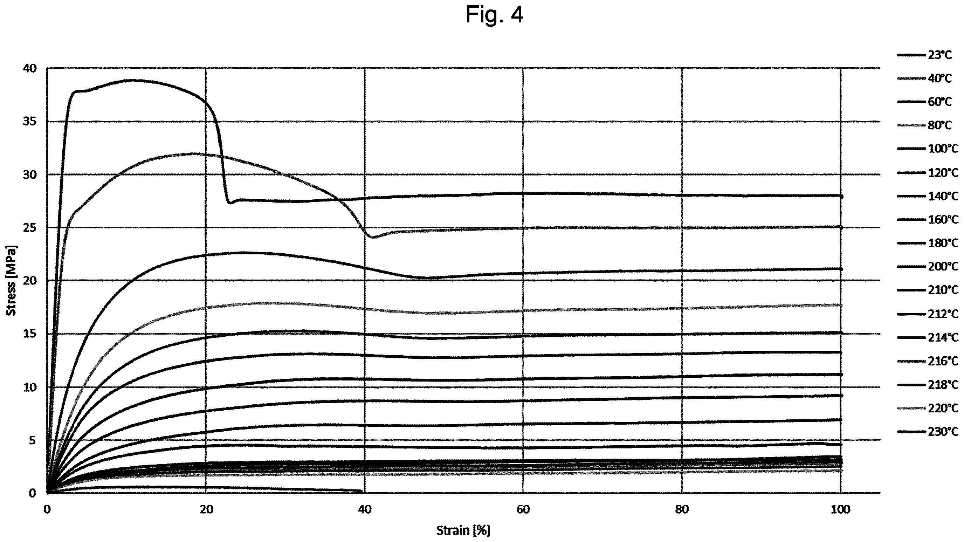

Fig. 4 - Example V1

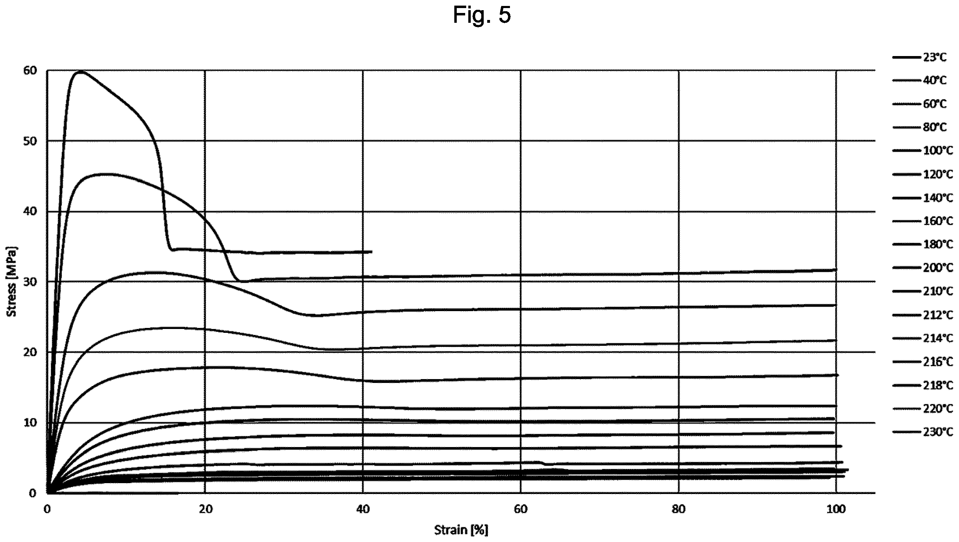

Fig. 5 - Example V2

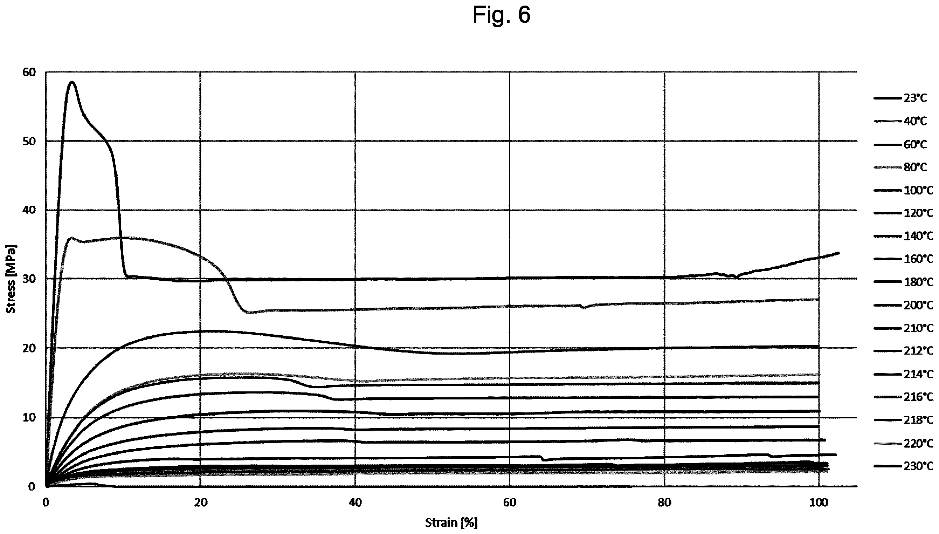

Fig. 6 - Example V3

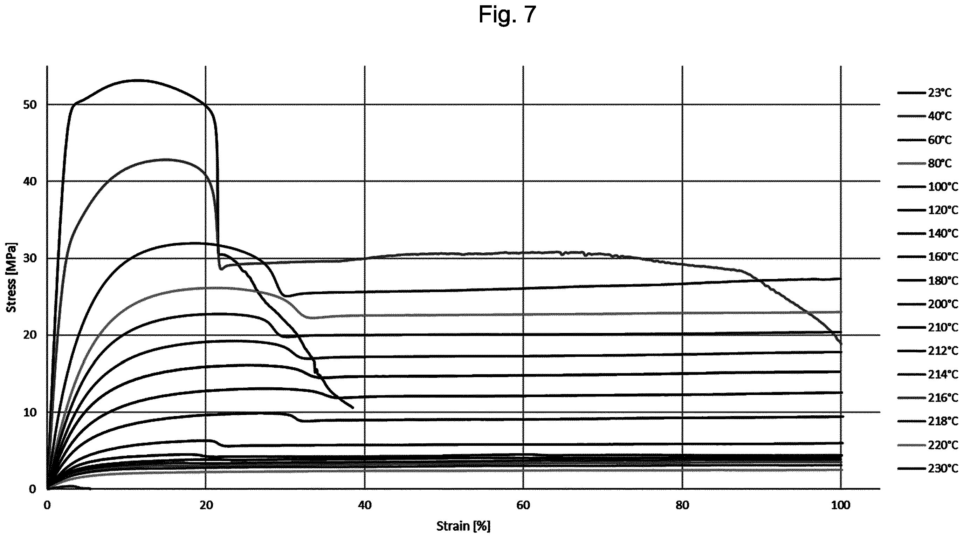

Fig. 7 - Example C2

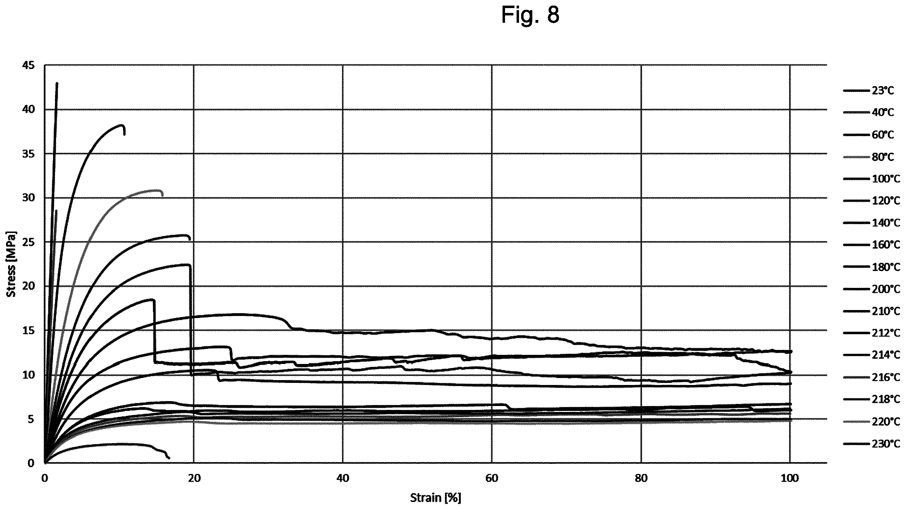

Fig. 8 - Example C3

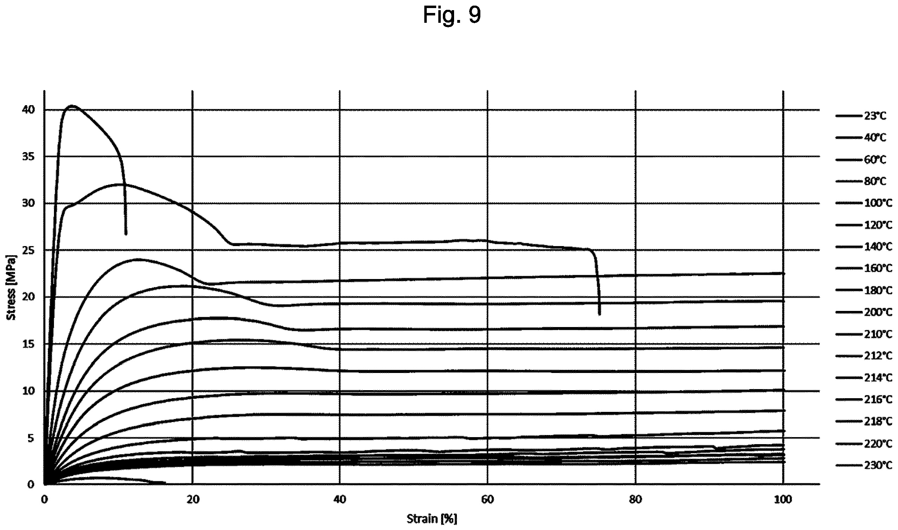

Fig. 9 - Example V4

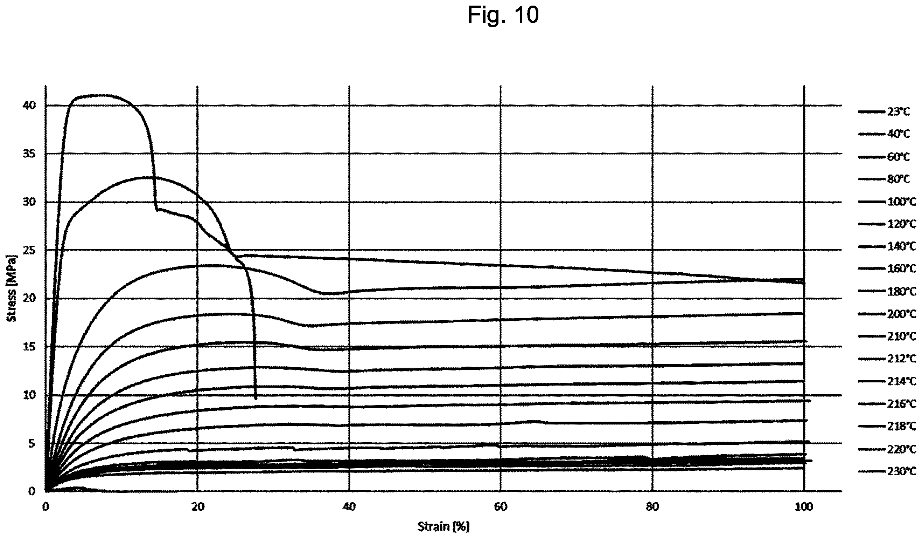

Fig. 10 - Example V5

## Claims

1. The use of a thermoplastic polymer having a melting point below 220 °C as additive in polybutylene terephthalate molding compositions for reducing the necking upon elongation of sheets or films of the polybutylene terephthalate molding composition in thermoforming processes, wherein the thermoplastic polymer having a melting point below 220 °C is selected from the group consisting of polyesters based on aliphatic and aromatic dicarboxylic acids and on aliphatic dihydroxy compounds.

2. The use according to claim 1, wherein the amount of the thermoplastic polymer having a melting point below 220 °C is 5 to 40 wt%, based on the total amount of the polybutylene terephthalate molding composition, which is 100 wt%.

3. The use according to claim 1 or 2, wherein the polybutylene terephthalate molding composition comprises
a) 50 to 95 wt% of polybutylene terephthalate as component A,
b) 5 to 50 wt% of the thermoplastic polymer having a melting point below 220 °C, as component B,
c) 0 to 45 wt% of filler as component C,
d) 0 to 20 wt% of further additives as component D,
wherein the total of components A to D is 100 wt% and wherein component B is a polyester based on aliphatic and aromatic dicarboxylic acids and on aliphatic dihydroxy compounds.

4. The use according to claim 3, wherein the polybutylene terephthalate molding composition comprises 50 to 94.9 wt% of component A, and component D comprises 0.1 to 2 wt% of a copolymer containing epoxy groups and based on styrene, acrylate and/or methacrylate, of a bisphenol A epoxide, or of a fatty acid amide of fatty acid ester or natural oil containing epoxy groups, or mixtures thereof, each based on the total of compounds A to D which is 100 wt%.

5. The use according to claim 4, wherein component D comprises 0.1 to 2 wt% of styrene-acrylic acid-glycidyl methacrylate copolymer, based on the total of components A to D which is 100 wt%.

6. The use according to one of claims 3 to 5, wherein 50 to 90 wt% of component A and 5 to 30 wt% of component C are present in the molding composition.

7. The use according to claim 3, wherein semiaromatic polyesters for component B are polyesters which comprise the following significant components:
BA) an acid component composed of
a1) from 30 to 99 mol% of at least one aliphatic, or at least one cycloaliphatic, dicarboxylic acid, or its ester-forming derivatives, or a mixture of these,
a2) from 1 to 70 mol% of at least one aromatic dicarboxylic acid, or its ester-forming derivative, or a mixture of these, and
a3) from 0 to 5 mol% of a compound comprising sulfonate groups,
BB) a diol component selected from at least one C₂-C₁₂ alkanediol and at least one C₅-C₁₀ cycloalkanediol, or a mixture of these,
and, if desired, also one or more components selected from
BC) a component selected from the group consisting of
c1) at least one dihydroxy compound comprising ether functions and having the formula I
HO-[(CH₂)*ₙ*-O]*ₘ*-H (I)
where n is 2, 3 or 4 and m is a whole number from 2 to 250,
c2) at least one hydroxycarboxylic acid of the formula Ila or Ilb 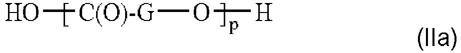 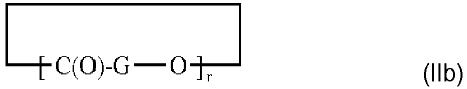 where p is a whole number from 1 to 1500 and r is a whole number from 1 to 4, and G is a radical selected from the group consisting of phenylene, - (CH₂)_{q}- where q is a whole number from 1 to 5, —C(R)H— and -C(R)HCH₂, where R is methyl or ethyl,
c3) at least one amino-C₂-C₁₂ alkanol, or at least one amino-C₅-C₁₀ cycloalkanol, or a mixture of these,
c4) at least one diamino-C₁-C₈ alkane,
c5) at least one 2,2'-bisoxazoline of the formula III 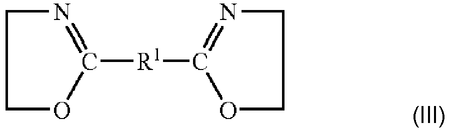 where R¹ is a single bond, a (CH₂)_{Z}-alkylene group, where z is 2, 3 or 4, or a phenylene group
c6) at least one aminocarboxylic acid selected from the group consisting of the naturally occurring amino acids, polyamides obtainable by polycondensing a dicarboxylic acid having from 4 to 6 carbon atoms with a diamine having from 4 to 10 carbon atoms, compounds of the formulae IVa and IVb 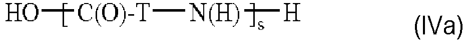 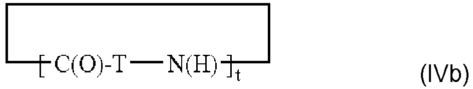 where s is an integer from 1 to 1500 and t is a whole number from 1 to 4, and T is a radical selected from the group consisting of phenylene, -(CH₂)ᵤ-, where u is a whole number from 1 to 12, -C(R²)H- and -C(R²)HCH₂-, where R² is methyl or ethyl,
and polyoxazolines having the repeat unit V 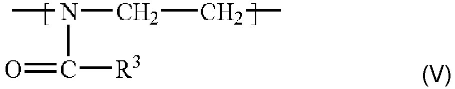 where R³ is hydrogen, C₁-C₆-alkyl, C₅-C₈-cycloalkyl, phenyl, either unsubstituted or with up to three C₁-C₄-alkyl substituents, or tetrahydrofuryl,
or a mixture composed of c1 to c6,
and
BD) a component selected from
d1) at least one compound having at least three groups capable of ester formation,
d2) at least one isocyanate,
d3) at least one divinyl ether,
or a mixture composed of d1) to d3).

8. The use according to claim 7, wherein semiaromatic polyesters for component B are based on the following components:
BA, BB, d1
BA, BB, d2
BA, BB, d1, d2
BA, BB, d3
BA, BB, c1
BA, BB, c1, d3
BA, BB, c3, c4
BA, BB, c3, c4, c5
BA, BB, d1, c3, c5
BA, BB, c3, d3
BA, BB, c3, d1
BA, BB, c1, c3, d3
BA, BB, c2.

9. A process for manufacturing moldings containing or made of a polybutylene terephthalate molding composition as defined in one of claims 3 to 8 by heating a sheet or film containing or made of the polybutylene terephthalate molding composition to a pliable forming temperature and thermoforming the heated sheet of film to a desired shape in a mold, cooling the shaped molding so that it solidifies and optionally trimming the shaped molding, wherein the polybutylene terephthalate molding composition is free from copolyetherester-elastomers.

10. The process of claim 9, wherein the sheet made of the polybutylene terephthalate molding composition is heated to a temperature in the range of from 170 to 220 °C.

11. A polybutylene terephthalate molding composition as defined in one of claims 3 to 8, wherein the amount of the thermoplastic polymer having a melting point below 220 °C is 15 to 25 wt%, based on the total amount of the polybutylene terephthalate molding composition, which is 100 wt% and wherein the polybutylene terephthalate molding composition is free from copolyetherester-elastomers.

12. The polybutylene terephthalate molding composition of claim 11, which comprises less than 15 wt%, based on the polybutylene terephthalate molding composition, of biodegradable homo- or copolyesters, selected from the group consisting of polylactide, polycaprolactone, polyhydroxyalkanoates and polyesters composed of aliphatic dicarboxylic acids and of aliphatic diols.

13. The polybutylene terephthalate molding composition of claim 11 or 12 which does not contain polymers containing acrylic acid and/or styrene containing recurring units other than styrene-acrylic acid-glycidyl methacrylate copolymers.

14. A thermoformed molding of a polybutylene terephthalate molding composition of one of claims 11 to 13.

## Patentansprüche

1. Verwendung eines thermoplastischen Polymers mit einem Schmelzpunkt von unter 220 °C als Zusatzstoff in Polybutylenterephthalat-Formzusammensetzungen zum Verringern des Einschnürens bei Dehnung von Bahnen oder Filmen der Polybutylenterephthalat-Formzusammensetzung bei Warmformverfahren, wobei das thermoplastische Polymer mit einem Schmelzpunkt von unter 220 °C ausgewählt ist aus der Gruppe bestehend aus Polyestern auf der Basis von aliphatischen und aromatischen Dicarbonsäuren und von aliphatischen Dihydroxyverbindungen.

2. Verwendung gemäß Anspruch 1, wobei die Menge des thermoplastischen Polymers mit einem Schmelzpunkt von unter 220 °C 5 bis 40 Gew.-%, bezogen auf die Gesamtmenge der Polybutylenterephthalat-Formzusammensetzung, die 100 Gew.-% ist, beträgt.

3. Verwendung gemäß Anspruch 1 oder 2, wobei die Polybutylenterephthalat-Formzusammensetzung umfasst:
a) 50 bis 95 Gew.-% Polybutylenterephthalat als Komponente A,
b) 5 bis 50 Gew.-% an dem thermoplastischen Polymer mit einem Schmelzpunkt von unter 220 °C als Komponente B,
c) 0 bis 45 Gew.-% Füllstoff als Komponente C,
d) 0 bis 20 Gew.-% an weiteren Zusatzstoffen als Komponente D,
wobei die Gesamtmenge der Komponenten A bis D 100 Gew.-% beträgt und wobei Komponente B ein Polyester auf der Basis von aliphatischen und aromatischen Dicarbonsäuren und von aliphatischen Dihydroxyverbindungen ist.

4. Verwendung gemäß Anspruch 3, wobei die Polybutylenterephthalat-Formzusammensetzung 50 bis 94, 9 Gew.-% Komponente A umfasst und Komponente D 0,1 bis 2 Gew.-% an einem Copolymer, das Epoxygruppen enthält, auf der Basis von Styrol, Acrylat und/oder Methacrylat, an einem Bisphenol A-Epoxid oder an einem Fettsäureamid von Fettsäureester oder natürlichem Öl, das Epoxygruppen enthält, oder an Gemischen davon umfasst, jeweils bezogen auf die Gesamtmenge der Verbindungen A bis D, die 100 Gew.-% ist.

5. Verwendung gemäß Anspruch 4, wobei Komponente D 0,1 bis 2 Gew.-% Styrol-Acrylsäure-Glycidylmethacrylat-Copolymer, bezogen auf die Gesamtmenge der Komponenten A bis D, die 100 Gew.-% ist, umfasst.

6. Verwendung gemäß einem der Ansprüche 3 bis 5, wobei in der Formzusammensetzung 50 bis 90 Gew.-% Komponente A und 5 bis 30 Gew.-% Komponente C vorhanden sind.

7. Verwendung gemäß Anspruch 3, wobei halbaromatische Polyester für Komponente B Polyester sind, die die folgenden wesentlichen Komponenten umfassen:
BA) eine Säurekomponente zusammengesetzt aus:
a1) von 30 bis 99 mol-% an wenigstens einer aliphatischen oder wenigstens einer cycloaliphatischen Dicarbonsäure oder ihren esterbildenden Derivaten oder einem Gemisch davon,
a2) von 1 bis 70 mol-% an wenigstens einer aromatischen Dicarbonsäure oder ihrem esterbildenden Derivat oder einem Gemisch davon und
a3) von 0 bis 5 mol-% an einer Verbindung, die Sulfonatgruppen umfasst,
BB) eine Diolkomponente ausgewählt aus wenigstens einem C₂-C₁₂Alkandiol und wenigstens einem C₅-C₁₀Cycloalkandiol oder einem Gemisch davon,
und, falls gewünscht, auch eine oder mehrere Komponenten ausgewählt aus
BC) eine Komponente ausgewählt aus der Gruppe bestehend aus
c1) wenigstens einer Dihydroxyverbindung, die Etherfunktionen umfasst und die Formel I aufweist
HO-[(CH₂)*ₙ*-O]*ₘ*-H (I)
wobei n 2, 3 oder 4 ist und m eine ganze Zahl von 2 bis 250 ist,
c2) wenigstens einer Hxydroxycarbonsäure der Formel IIa oder IIb, 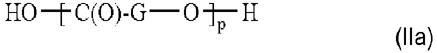 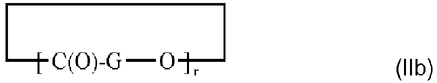 wobei p eine ganze Zahl von 1 bis 1500 ist und r eine ganze Zahl von 1 bis 4 ist und G ein Rest ausgewählt aus der Gruppe bestehend aus Phenylen, -(CH₂)_{q}-, wobei q eine ganze Zahl von 1 bis 5 ist, -C(R)H- und -C(R)HCH₂, wobei R Methyl oder Ethyl ist, ist,
c3) wenigstens einem Amino-C₂-C₁₂alkanol oder wenigstens einem Amino-C₂-C₁₀cycloalkanol oder einem Gemisch davon,
c4) wenigstens einem Diamino-C₁-C₈alkan,
c5) wenigstens einem 2,2'-Bisoxazolin der Formel III, 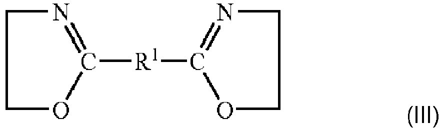 wobei R¹ eine Einfachbindung, eine (CH₂)_{z}-Alkylengruppe, wobei z 2, 3 oder 4 ist, oder eine Phenylengruppe ist,
c6) wenigstens einer Aminocarbonsäure ausgewählt aus der Gruppe bestehend aus den natürlich vorkommenden Aminosäuren, Polyamiden, die erhältlich sind durch Polykondensation einer Dicarbonsäure, die von 4 bis 6 Kohlenstoffatome aufweist, mit einem Diamin, das von 4 bis 10 Kohlenstoffatome aufweist, Verbindungen der Formeln IVa und IVb, 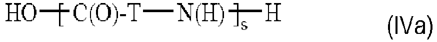 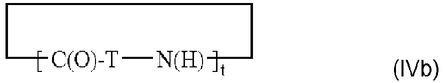 wobei s eine ganze Zahl von 1 bis 1500 ist und t eine ganze Zahl von 1 bis 4 ist und T ein Rest ausgewählt aus der Gruppe bestehend aus Phenylen, -(CH₂)ᵤ-, wobei u eine ganze Zahl von 1 bis 12 ist, -C(R²)H- und -C(R²)HCH₂, wobei R² Methyl oder Ethyl ist, ist,
und Polyoxazolinen mit der Wiederholungseinheit V 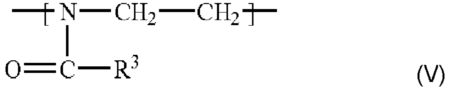 wobei R³ Wasserstoff, C₁-C₆Alkyl, C₅-C₈Cycloalkyl, Phenyl, entweder unsubstituiert oder mit bis zu drei C₁-C₄Alkylsubstituenten, oder Tetrahydrofurfuryl ist,
oder einem Gemisch zusammengesetzt aus c1 bis c6, und
BD) eine Komponente ausgewählt aus:
d1) wenigstens einer Verbindung mit wenigstens drei Gruppen, die zur Esterbildung fähig sind,
d2) wenigstens einem Isocyanat,
d3) wenigstens einem Divinylether
oder einem Gemisch zusammengesetzt aus d1) bis d3) .

8. Verwendung gemäß Anspruch 7, wobei halbaromatische Polyester für Komponente B auf der Basis der folgenden Komponenten stehen:
BA, BB, d1
BA, BB, d2
BA, BB, d1, d2
BA, BB, d3
BA, BB, c1
BA, BB, c1, d3
BA, BB, c3, c4
BA, BB, c3, c4, c5
BA, BB, d1, c3, c5
BA, BB, c3, d3
BA, BB, c3, d1
BA, BB, c1, c3, d3
BA, BB, c2.

9. Verfahren zur Herstellung von Formteilen, die eine Polybutylenterephthalat-Formzusammensetzung gemäß einem der Ansprüche 3 bis 8 enthalten oder daraus bestehen, durch Erhitzen einer Bahn oder eines Films, die/der die Polybutylenterephthalat-Formzusammensetzung enthält oder daraus besteht, auf eine Temperatur zum geschmeidigen Formen und Warmformen der/des erhitzten Bahn oder Films zu einer gewünschten Form in einem Formwerkzeug, Kühlen des geformten Formteils, so dass es erstarrt, und gegebenenfalls Beschneiden des geformten Formteils, wobei die Polybutylenterephthalat-Formzusammensetzung frei von Copolyetherester-Elastomeren ist.

10. Verfahren gemäß Anspruch 9, wobei die aus der Polybutylenterephthalat-Formzusammensetzung gebildete Bahn auf eine Temperatur in dem Bereich von 170 bis 220 °C erhitzt wird.

11. Polybutylenterephthalat-Formzusammensetzung gemäß einem der Ansprüche 3 bis 8, wobei die Menge des thermoplastischen Polymers mit einem Schmelzpunkt von unter 220 °C 15 bis 25 Gew.-%, bezogen auf die Gesamtmenge der Polybutylenterephthalat-Formzusammensetzung, die 100 Gew.-% ist, beträgt, und wobei die Polybutylenterephthalat-Formzusammensetzung frei von Copolyetherester-Elastomeren ist.

12. Polybutylenterephthalat-Formzusammensetzung gemäß Anspruch 11, umfassend weniger als 15 Gew.-%, bezogen auf die Polybutylenterephthalat-Formzusammensetzung, an bioabbaubaren Homo- oder Copolyestern ausgewählt aus der Gruppe bestehend aus Polylactid, Polycaprolacton, Polyhydroxyalkanoaten und Polyestern, die aus aliphatischen Dicarbonsäuren und aus aliphatischen Diolen zusammengesetzt sind.

13. Polybutylenterephthalat-Formzusammensetzung gemäß Anspruch 11 oder 12, die keine Polymere enthält, die Acrylsäure- und/oder Styrol-enthaltende Wiederholungseinheiten enthalten, die von Styrol-Acrylsäure-Glycidylmethacrylat-Copolymeren verschieden sind.

14. Warmgeformtes Formteil aus einer Polybutylenterephthalat-Formzusammensetzung gemäß einem der Ansprüche 11 bis 13.

## Revendications

1. Utilisation d'un polymère thermoplastique possédant un point de fusion inférieur à 220 °C en tant qu'additif dans des compositions de moulage de poly(téréphtalate de butylène) pour la réduction de la striction lors de l'élongation de feuilles ou de films de la composition de moulage de poly(téréphtalate de butylène) dans des procédés de thermoformage, le polymère thermoplastique possédant un point de fusion inférieur à 220 °C étant choisi dans le groupe constitué par des polyesters à base d'acides dicarboxyliques aliphatiques et aromatiques et sur des composés de type dihydroxy aliphatiques.

2. Utilisation selon la revendication 1, la quantité du polymère thermoplastique possédant un point de fusion inférieur à 220 °C étant de 5 à 40 % en poids, sur la base de la quantité totale de la composition de moulage de poly(téréphtalate de butylène), qui est de 100 % en poids.

3. Utilisation selon la revendication 1 ou 2, la composition de moulage de poly(téréphtalate de butylène) comprenant
a) 50 à 95 % en poids de poly(téréphtalate de butylène) en tant que composant A,
b) 5 à 50 % en poids du polymère thermoplastique possédant un point de fusion inférieur à 220 °C, en tant que composant B,
c) 0 à 45 % en poids d'une charge en tant que composant C,
d) 0 à 20 pour 100 en poids d'autres additifs en tant que composant D,
le total des composants A à D étant de 100 % en poids et le composant B étant un polyester à base d'acides dicarboxyliques aliphatiques et aromatiques et sur des composés de type dihydroxy aliphatiques.

4. Utilisation selon la revendication 3, la composition de moulage de poly(téréphtalate de butylène) comprenant 50 à 94,9 % en poids de composant A, et le composant D comprenant 0,1 à 2 % en poids d'un copolymère contenant des groupes époxy et à base de styrène, d'acrylate et/ou de méthacrylate, d'un époxyde de bisphénol A, ou d'un amide d'acide gras ou d'un ester d'acide gras ou d'une huile naturelle contenant des groupes époxy, ou des mélanges correspondants, chacun sur la base du total des composés A à D qui est de 100 % en poids.

5. Utilisation selon la revendication 4, le composant D comprenant 0,1 à 2 % en poids de copolymère de styrène-acide acrylique-méthacrylate de glycidyle, sur la base du total des composés A à D qui est de 100 % en poids.

6. Utilisation selon l'une des revendications 3 à 5, 50 à 90 % en poids de composant A et 5 à 30 % en poids de composant C étant présents dans la composition de moulage.

7. Utilisation selon la revendication 3, des polyesters semi-aromatiques pour le composant B étant des polyesters qui comprennent les composants significatifs suivant :
BA) un composant de type acide composé de
a1) de 30 à 99 % en poids d'au moins un acide dicarboxylique aliphatique, ou d'au moins un acide dicarboxylique cycloaliphatique, ou de leurs dérivés de formation d'esters, ou un mélange de ceux-ci,
a2) de 1 à 70 % en moles d'au moins un acide dicarboxylique aromatique, ou de son dérivé de formation d'ester, ou un mélange de ceux-ci, et
a3) de 0 à 5 % en moles d'un composé comprenant des groupes sulfonate,
BB) un composant de type diols choisi parmi au moins un alcanediol en C₂₋₁₂ et au moins un cycloalcanediol en C₅₋₁₀, ou un mélange de ceux-ci,
et, si cela est souhaité, également un ou plusieurs composants choisis parmi
BC) un composant choisi dans le groupe constitué par
c1) au moins un composé de type dihydroxy comprenant des fonctions éther et possédant la formule I
HO-[(CH₂)*ₙ*-O]*ₘ*-H (I)
où n est 2, 3 ou 4 et m est un nombre entier de 2 à 250,
c2) au moins un acide hydroxycarboxylique de la formule IIa ou IIb 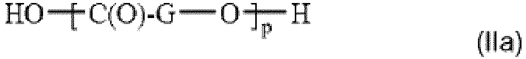 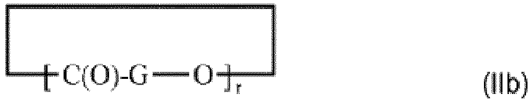 où p est un nombre entier de 1 à 1 500 et r est un nombre entier de 1 à 4, et G est un radical choisi dans le groupe constitué par phénylène, -(CH₂)_{q}- où q est un nombre entier de 1 à 5, -C(R)H-, et -C(R)HCH₂-, où R est méthyle ou éthyle,
c3) au moins un amino -C₂₋₁₂ alcanol, ou au moins un amino -C₅₋₁₀ cycloalcanol, ou un mélange de ceux-ci,
c4) au moins un diamino-C₁₋₈ alcane,
c5) au moins une 2,2'-bisoxazoline de la formule III 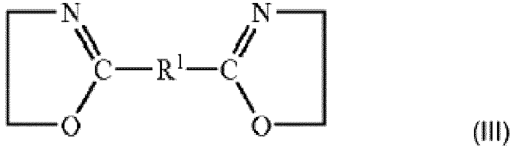 où R¹ est une simple liaison, un groupe (CH₂)_{z}-alkylène, où z est 2, 3 ou 4, ou un groupe phénylène
c6) au moins un acide aminocarboxylique choisi dans le groupe constitué par les acides aminés d'origine naturelle, des polyamides pouvant être obtenus par polycondensation d'un acide dicarboxylique possédant de 4 à 6 atomes de carbone avec une diamine possédant de 4 à 10 atomes de carbone, des composés des formules IVa et IVb 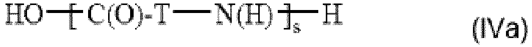 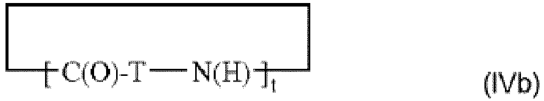 où s est un entier de 1 à 1 500 et t est un nombre entier de 1 à 4 et T est un radical choisi dans le groupe constitué par phénylène, -(CH₂)ᵤ- où u est un nombre entier de 1 à 12, -C(R²)H-, et -C(R²)HCH₂- , où R² est méthyle ou éthyle,
et des polyoxazolines possédant le motif répétitif V 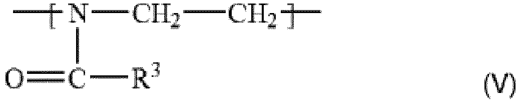 où R³ est hydrogène, alkyle en C₁₋₆, cycloalkyle en C₅₋₈, phényle, soit non substitué soit comportant jusqu'à trois substituants alkyle en C₁₋₄, ou tétrahydrofuryle,
ou un mélange composé de c1 à c6,
et
BD) un composant choisi parmi
d1) au moins un composé possédant au moins trois groupes capables de formation d'ester,
d2) au moins un isocyanate,
d3) au moins un éther de divinyle,
ou un mélange composé de d1) à d3).

8. Utilisation selon la revendication 7, les polyesters semi-aromatiques pour le composant B étant basés sur les composants suivants :
BA, BB, d1
BA, BB, d2
BA, BB, d1, d2
BA, BB, d3
BA, BB, c1
BA, BB, c1, d3
BA, BB, c3, c4
BA, BB, c3, c4, c5
BA, BB, d1, c3, c5
BA, BB, c3, d3
BA, BB, c3, d1
BA, BB, c1, c3, d3
BA, BB, c2.

9. Procédé pour la fabrication de moulages contenant ou composés d'une composition de moulage de poly(téréphtalate de butylène) telle que définie dans l'une des revendications 3 à 8 en chauffant une feuille ou un film contenant ou composé de la composition de moulage de poly(téréphtalate de butylène) jusqu'à une température de formage flexible et thermoformage de la feuille ou du film chauffé(e) en une forme souhaitée dans un moule, refroidissement du moulage façonné de sorte qu'il solidifie et éventuellement taille du moulage façonné, la composition de moulage de poly(téréphtalate de butylène) étant exempte d'élastomères de copolyéther-ester.

10. Procédé selon la revendication 9, la feuille composée de la composition de moulage de poly(téréphtalate de butylène) étant chauffée jusqu'à une température dans la plage allant de 170 à 220 °C.

11. Composition de moulage de poly(téréphtalate de butylène) telle que définie dans l'une des revendications 3 à 8, la quantité du polymère thermoplastique possédant un point de fusion inférieur à 220 °C étant de 15 à 25 % en poids, sur la base de la quantité totale de la composition de moulage de poly(téréphtalate de butylène), qui est de 100 % en poids et la composition de moulage de poly(téréphtalate de butylène) étant exempte d'élastomères de copolyéther-ester.

12. Composition de moulage de poly(téréphtalate de butylène) selon la revendication 11, qui comprend moins de 15 % en poids, sur la base de la composition de moulage de poly(téréphtalate de butylène), d'homopolyesters ou copolyesters biodégradables, choisis dans le groupe constitué par un polylactide, une polycaprolactone, des polyhydroxyalcanoates et des polyesters composés d'acides dicarboxyliques aliphatiques et de diols aliphatiques.

13. Composition de moulage de poly(téréphtalate de butylène) selon la revendication 11 ou 12 qui ne contient pas de polymères contenant des motifs répétitifs contenant de l'acide acrylique et/ou du styrène autres que des copolymères de styrène-acide acrylique-méthacrylate de glycidyle.

14. Moulage thermoformé d'une composition de moulage de poly(téréphtalate de butylène) selon l'une des revendications 11 à 13.
